Europäisches Patentamt

European Patent Office

Office européen des brevets

(11) Veröffentlichungsnummer: 0 164 029
A2

(12) **EUROPÄISCHE PATENTANMELDUNG**

(21) Anmeldenummer: 85106370.1

(22) Anmeldetag: 23.05.85

(51) Int. Cl.⁴: **B 29 C 47/92, G 01 B 11/24**

(30) Priorität: 05.06.84 DE 3420910
26.06.84 DE 3423491

(43) Veröffentlichungstag der Anmeldung: 11.12.85
Patentblatt 85/50

(84) Benannte Vertragsstaaten: **AT BE CH DE FR GB IT LI LU NL SE**

(71) Anmelder: **Kunststoff-Verarbeitungs GmbH Dirk A. Brügmann, Werkzeugstrasse 18, D-5800 Hagen-Halden (DE)**

(72) Erfinder: **Becker, Bernd, In der Hock'sche 6, D-5800 Hagen-Garenfeld (DE)**

(74) Vertreter: **Patentanwälte Müller-Boré, Deufel, Schön, Hertel, Lewald, Otto, Postfach 26 02 47 Isartorplatz 6, D-8000 München 26 (DE)**

(54) Vorrichtung zur Ermittlung einer proportionalen Veränderung eines Profils an einer Strangpresse.

(57) Die Vorrichtung oder der Messkopf (26) besteht aus einem Gehäuse (30), in welchem eine Lichtquelle (32) und ein lichtempfindliches Element (34) angeordnet sind. Von der Lichtquelle (32) wird über Lichtleitfasern (36) Lichtenergie über ein zu überwachendes Profil (24) geleitet. Aufgenommen wird Lichtenergie von Lichtleitasern (44), welche das Licht zu dem lichtempfindlichen Element (34) leiten. Durch die Anordnung von Lichtleitfasern kann der Messkopf sehr dünn ausgeführt werden, so dass er unmittelbar in den Stauberich vor einer Kalibriereinrichtung angeordnet werden kann. Um störende Lichteinflüsse aus der Umgebung auszuschalten, ist vor dem lichtempfindlichen Element (34) ein Filter (46) angeordnet. Die Feineinstellung des Messkopfes (26) erfolgt über einen Schrittmotor und die Regelung der Abzugseinrichtung der Strangpresse erfolgt verzögert nach Erkennung der Tendenz einer proportionalen Veränderung des Profils vor der Kalibriereinrichtung.

## Beschreibung

Die Erfindung betrifft eine Vorrichtung zur Ermittlung einer proportionalen Veränderung eines Profils vor einer Kalibriereinrichtung an einer Strangpresse mit einem Extruder und einer Abzugseinrichtung, insbesondere zur Herstellung von Kunststoffprofilen o.dgl., mit einer Lichtquelle und einem lichtempfindlichen Element.

Eine derartige Vorrichtung ist aus der DE-OS 32 34 126 bekannt. Ein derartiger Meßkopf wird an eine Kante des Profils zwischen der Düse und der Kalibriereinrichtung gebracht. Je nach proportionaler Veränderung des Profils wird das Strahlungsfeld der Lichtquelle, vorzugsweise einer Infrarot-Leuchtdiode, mehr oder weniger verdeckt. Da der Anteil der auf das lichtempfindliche Element, vorzugsweise auf ein Infrarot-Phototransistor fallenden Lichtenergie durch einen Stau vor der Kalibriereinrichtung verändert wird, wird das von dem lichtempfindlichen Element ausgehende und über eine Auswerteeinrichtung dem Regelgerät modifizierte zugeführte Signal verändert, wodurch als Ergebnis die Abziehgeschwindigkeit an der Abzugseinrichtung ebenfalls verändert wird.

Nachteilig an dem bekannten Meßkopf ist, daß die Lichtquelle und das lichtempfindliche Element einen relativ großen Platzbedarf haben, so daß eine Messung einer proportionalen Veränderung des Profils oder eines Staus unmittelbar vor der Kalibriereinrichtung nicht möglich ist. Ferner kann Umgebungslicht aus dem Raum, in welchem die Strangpresse angeordnet ist, die Messung verfälschen.

Der Erfindung liegt die Aufgabe zugrunde, einen bekannten Meßkopf zum berührungslosen Abtasten der proportionalen Veränderung eines Profils zwischen Düsen und Kalibrierung, insbesondere bei Kunststoffprofilfertigungsstraßen zu verbessern.

Diese Aufgabe wird erfindungsgemäß dadurch gelöst, daß das Licht aus der Lichtquelle über Lichtleitfasern zu der Meßstelle und über Lichtleitfasern von der Meßstelle zu dem lichtempfindlichen Element geleitet wird. Da Lichtleitfasern mit sehr geringem Durchmesser in der Lage sind, für eine Messung ausreichend viel Licht zu transportieren und zu erfassen, kann die Vorrichtung bzw. der Meßkopf in dem Bereich, der vor der Kalibriereinrichtung angeordnet ist, sehr dünn ausgeführt werden, so daß die Messung einer proportionalen Veränderung des Profils unmittelbar am Eintrittsende der Kalibriereinrichtung möglich ist. Dadurch ist es möglich, die Abzugsgeschwindigkeit eines Strangpreßprofils exakt zu steuern.

Gemäß einer bevorzugten Ausführungsform der Erfindung sind die Lichtleitfasern in einem Gehäuse eingegossen.

Um einen störenden und die Messung verfälschenden Einfluß von Umgebungslicht auszuschalten, kann in weiterer Ausgestaltung der Erfindung vor dem lichtempfindlichen Element ein Filter angeordnet sein. Dieser Filter kann je nach Diode nur Licht mit einer Wellenlänge von etwa 900 Nanometer durchlassen, so daß von Umgebungslicht stammender Lichtanteil kein Signal erzeugen kann. Der Filter kann dabei entweder an dem Eintrittsende der Lichtleitfasern, die zu dem lichtempfindlichen Element führen, oder direkt vor dem lichtempfindlichen Element innerhalb des Gehäuses angeordnet sein.

Um die Handhabung der Vorrichtung zu erleichtern und die Einstellung an dem zu überwachenden Profilbereich zu verbessern, kann in Weiterbildung der Erfindung ein Stellmotor vorgesehen sein. Damit ist es möglich, den Meßkopf genau zu plazieren, ohne daß ungewollte Bewegungen auf die Vorrichtung übertragen werden.

Bekannte Meß- und Regeleinrichtungen zur Überwachung der Staubildung bzw. der proportionalen Veränderung eines Profils, insbesondere an Profilstrangpreßmaschinen regeln die Abziehgeschwindigkeit der Abzugseinrichtung unmittelbar ansprechend auf die Messung über eine mechanische oder optische Einrichtung ständig, so daß beispielsweise thyristor-gesteuerte Gleichstrommotore erforderlich sind. Mit der erfindungsgemäßen Vorrichtung ist es möglich, einen Getriebedrehstrommotor mittels eines Schrittmotors zu regeln, in dem ein Verzögerungsglied zwischengeschaltet ist, so daß eine Regelung erst nach Erfassung eines Trends an dem Eintrittsende der Kalibriereinrichtung erfolgt. Dadurch können beispielsweise vorhandene Strangpressen ohne Umrüstung der Abzugseinrichtung mit der erfindungsgemäßen Vorrichtung ausgerüstet werden.

Gemäß einer bevorzugten Ausführungsform ist die Lichtquelle eine Infrarot-Leuchtdiode und das lichtempfindliche Element ein Infrarot-Phototransistor und die Lichtleitfasern sind Glasfaseroptiken.

Ausführungsbeispiele der Erfindung werden anhand der Zeichnung erläutert. Es zeigen

Fig. 1          eine Ausführungsform einer Strangpresse
                zur Herstellung von Kunststoffprofilen,

Fig. 2          in vergrößerter Darstellung das Austrittsende einer Extruderdüse und das Eintrittsende einer Kalibriereinrichtung,

Fig. 3          eine Seitenansicht eines Meßkopfes,

Fig. 4        einen Schnitt gemäß der Linie IV-IV von

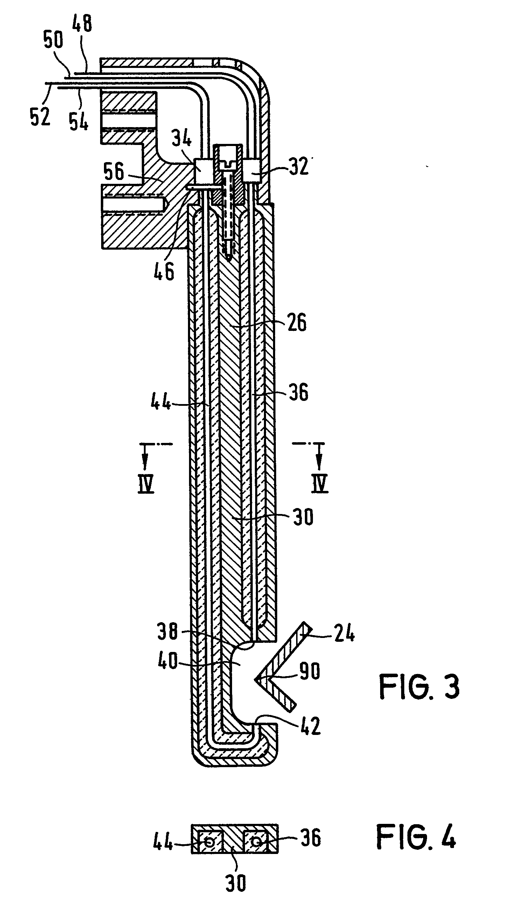

              Fig. 3 und

Fig. 5        den Meßkopf nach Fig. 3 mit Befestigungs- und
              Einstelleinrichtungen.

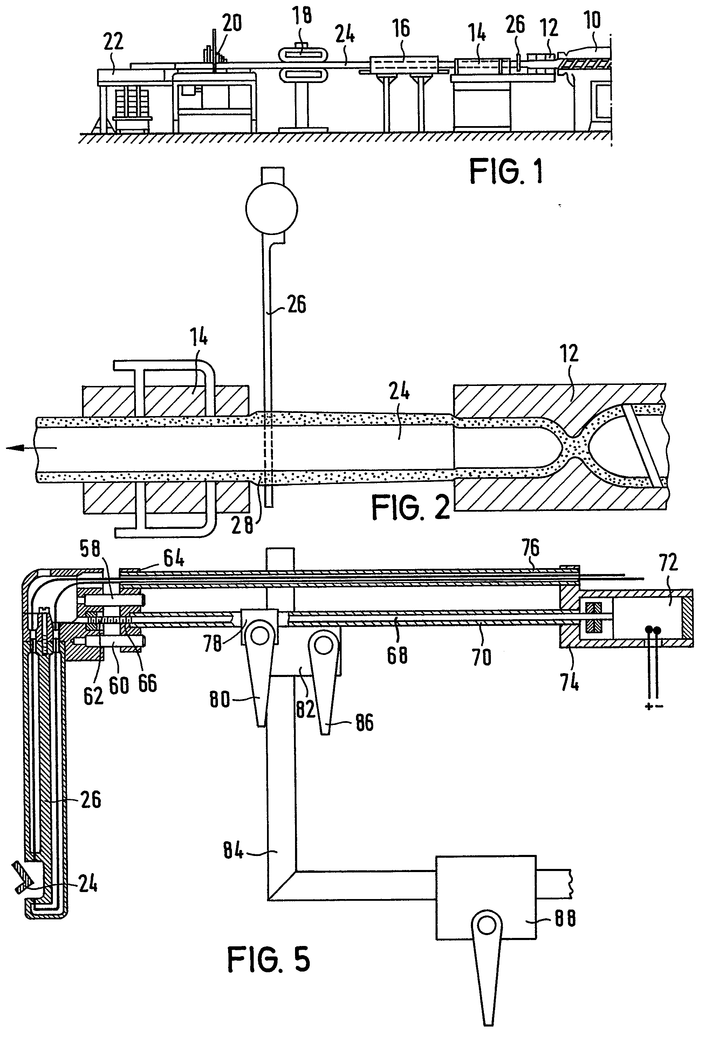

Die in Fig. 1 gezeigte Anlage zur Herstellung von Kunststoffprofilen besteht aus einer Schneckenpresse 10, einem
Werkzeug 12, einer Kalibriereinrichtung 14, einer Kühlstrecke 16, einer Abzugseinrichtung 18, einer Ablängsäge
20 sowie einer Stapeleinrichtung 22. Zur Profilherstellung
wird von der Schneckenpresse 10 das Kunststoffmaterial
durch das Werkzeug 12 der Kalibriereinrichtung 14 zugeführt. In der anschließenden Kühlstrecke 16 wird mittels
Wasser das Kunststoffprofil 24 soweit abgekühlt, daß keine
thermoelastische Verformung mehr möglich ist. Nach Durchlaufen der Abzugseinrichtung 18 gelangt das Profil zu der
automatischen Ablängsäge 20, wonach die Profile in der
Stapeleinrichtung 22 gestapelt und für den Abtransport
vorbereitet werden.

Zwischen dem Werkzeug oder der Düse 12 und der Kalibriereinrichtung 14 ist eine Vorrichtung 26 zur Ermittlung
einer proportionalen Veränderung eines Profils, beispielsweise durch eine Staubildung angeordnet. Wie aus Fig. 2 zu
ersehen ist, befindet sich die Vorrichtung oder der Meßkopf
26 unmittelbar vor dem Eintrittsende der Kalibriereinrichtung 14. Das die Düse oder das Werkzeug 12 verlassende Profil
24 kann an dem Eintrittsende der Kalibriereinrichtung 14 bei
nicht genau abgestimmter Abzugsgeschwindigkeit eine proportionale Veränderung 28 seiner Umfangskontur aufweisen, welche durch die Vorrich-

tung oder den Meßkopf 26 erfaßt werden soll.

Wie insbesondere aus den Fig. 3 und 4 zu ersehen ist, besteht der Meßkopf 26 aus einem Gehäuse 30, in welchem eine Lichtquelle oder ein Sender 32 und ein lichtempfindliches Element oder ein Empfänger 34 angeordnet sind. Von dem Sender 32 wird über Lichtleitfasern 36 abgegebene Lichtenergie, vorzugsweise eine Infrarotstrahlung, zu dem Ende 38 der Lichtleitfasern 36 geführt. Das Gehäuse 30 ist dazu mit einer Ausnehmung 40 ausgebildet, so daß der Meßkopf 26 die Profilkante 90 umgreifen kann. Dem Austrittsende 38 der Lichtleitfasern 36 gegenüberliegend ist das Eintrittsende 42 von Lichtleitfasern 44, welche zu dem Empfänger 34 geführt sind. Vor dem Empfänger 34 ist an dem Ende der Lichtleitfasern 44 ein Filter 46 vorgesehen, welcher nur Licht einer bestimmten Wellenlänge hindurchläßt, so daß beispielsweise eine Messung beeinflußendes oder verfälschendes Umgebungslicht herausgefiltert wird. Der Sender 32 ist über Anschlüsse 48, 50 mit einer Stromquelle verbunden und von dem Empfänger 34 sind Leitungen 52, 54 zu der die Signale erfassenden, auswertenden und die Abzugseinrichtung steuernden Regeleinrichtung geführt. Die Lichtleitfasern 36 und 44 weisen einen Durchmesser im Millimeterbereich auf, so daß das Gehäuse 30 des Meßkopfes 26 sehr dünn ausgeführt werden kann, wie aus den Fig. 4 u.5 zu ersehen ist. Die Lichtleitfasern 36 und 44 sind in dem Gehäuse 30 vorzugsweise eingegossen. Bei dem gezeigten Ausführungsbeispiel wird das aus dem Austrittsende 38 austretende Licht zumindest zum Teil von der proportionalen Veränderung 28 des Profils daran gehindert, auf das Eintrittsende 42 der Lichtleitfaser 44 zu treffen, welche zu dem Empfänger 34 führt. Damit wird in dem Empfänger 34 ein Signal erzeugt, welches in der Erfassungs- und Auswerteeinrichtung verstärkt und verglichen wird, und das Ausgangssignal wird nach Erfassung der Stautendenz vor dem Eintrittsende der Kalibriereinrichtung mit einer Verzögerung, beispielsweise dem Schrittmotor eines Getriebedrehstrommotors, zugeführt, wodurch dann die Abzugsgeschwindigkeit vergrößert wird, um die proportionale Veränderung des Profils vor der Kalibriereinrichtung abzubauen und dieses auf die Ausgangsform zurückzubringen.

Das Gehäuse 30 ist von der Breitseite her beispielsweise mit Nuten ausgebildet, in welchen die Lichtleitfasern 36 und 44 eingelegt sind. Nach Einbringen der Lichtleitfasern werden die Nuten ausgegossen, wodurch die Lichtleitfasern sicher an dem Gehäuse 30 gehalten werden. Da der Bereich 56 des Gehäuses, in welchem der Sender 32 und der Empfänger 34 angeordnet sind, in ausreichendem Abstand von der Ausnehmung 40 angeordnet ist, kann dieser Bereich entsprechend stärker ausgebildet sein, da er nicht unmittelbar an dem Eintrittsende der Kalibriereinrichtung angeordnet werden muß. An diesem Bereich 56 sind zwei Führungszapfen 58 und 60 befestigt. Zwischen diesen Führungszapfen 58 und 60 ist ein mit einem Außengewinde versehener Zapfen 62 drehbar angeordnet. Die Zapfen 58 bis 62 dienen der Verstellung des Meßkopfes oder der Vorrichtung 26. Die Zapfen 58 und 60 sind verschiebbar in einem Metallblock 64 geführt. In dem Block 64 ist eine mit einem Innengewinde ausgebildete Durchgangsbohrung 66 vorgesehen, durch welche der Gewindezapfen 62 verläuft. Der Gewindezapfen 62 stellt das Ende einer Welle 68 dar, welche durch ein Rohr 70 geführt ist, das mit einem Ende in dem Block 64 koaxial zu der Gewindebohrung 66 befestigt ist. An dem dem Gewindezapfen 62 gegenüberliegenden Ende der Welle 68 ist ein Stellmotor 72 angeordnet, mit welchem die Welle 68 und damit der Gewindezapfen 62 verdreht werden kann. Je nach Drehrichtung der Welle 68 und des Gewindezapfens 62 verschiebt sich der Meßkopf 26 zu dem Block hin oder von diesem weg. Das Rohr 70 ist an dem dem Block 64 gegenüberliegenden Ende in einem Block 74 befestigt und die Blöcke 64 und 74 sind über ein zweites Rohr 76 miteinander verbunden.

Zur Grobeinstellung des Meßkopfes wird das Rohr 70 in einer Hülse 78 verschiebbar geführt. In diese Hülse 78 kann das Rohr 70 über einen mit einem Griff 80 versehenen Exzenter festgelegt werden. Die Hülse 78 ist an einem Gleitteil 82 angeordnet, welches an einer Halterung 84 verschiebbar ist. Das Gleitteil 82 kann über einen mit einem Griff 86 versehenen Exzenter an der Halterung 84 festgelegt werden. Mit Hilfe der Hülse 78 und dem Exzenter 80 sowie dem Gleitteil 82 und dem Exzenter 86 kann der Meßkopf 26 in Horizontal- und Vertikalrichtung eingestellt werden. Der Halter 34 ist über eine Halterung 88 beispielsweise an einem Maschinenrahmen befestigt.

Ansprüche

1.     Vorrichtung zur Ermittlung einer proportionalen Veränderung eines Profils vor einer Kalibriereinrichtung einer Strangpresse, insbesondere zur Herstellung von Kunststoffprofilen oder dgl., welche einen Extruder und eine Abzugseinrichtung aufweist, wobei die Vorrichtung eine Lichtquelle und ein lichtempfindliches Element aufweist, dadurch g e - k e n n z e i c h n e t , daß das Licht aus der Lichtquelle (32) über Lichtleitfasern (36) zu der Meßstelle und über Lichtleitfasern (44) von der Meßstelle zu dem lichtempfindlichen Element (34) geleitet wird.

2.     Vorrichtung nach Anspruch 1, dadurch gekennzeichnet, daß die Lichtleitfasern (36, 44) in einem Gehäuse (30) eingegossen sind.

3. Vorrichtung nach Anspruch 1 oder 2, dadurch gekennzeichnet, daß vor dem lichtempfindlichen Element (34) ein Filter (46) angeordnet ist.

4. Vorrichtung nach Anspruch 3, dadurch gekennzeichnet, daß der Filter vor dem Eintrittsende der Lichtleitfasern, die zu dem lichtempfindlichen Element führen, oder unmittelbar vor dem lichtempfindlichen Element (34) innerhalb des Gehäuses (30) angeordnet ist.

5. Vorrichtung nach einem der Ansprüche 1 bis 4, dadurch gekennzeichnet, daß ein Stellmotor (72) zur Feineinstellung vorgesehen ist.

6. Vorrichtung nach einem der Ansprüche 1 bis 5, dadurch gekennzeichnet, daß die von dem lichtempfindlichen Element (34) ausgewerteten Signale über ein Verzögerungsglied einen Schrittmotor eines Getriebedrehstrommotors der Abzugsvorrichtung regeln.

7. Vorrichtung nach einem der Ansprüche 1 bis 6, dadurch gekennzeichnet, daß die Lichtquelle (32) eine Infrarot-Leuchtdiode und das lichtempfindliche Element (34) ein Infrarot-Phototransistor ist.

8. Vorrichtung nach einem der Ansprüche 1 bis 7, dadurch gekennzeichnet, daß die Lichtleitfasern (36, 44) eine Glasfaseroptik sind.

FIG. 1

FIG. 2

FIG. 5

FIG. 3

FIG. 4